# EUROPEAN PATENT SPECIFICATION

(11) **EP 3 861 064 B1**
(45) Date of publication and mention of the grant of the patent: **12.04.2023**
(21) Application number: 19769163.7
(22) Date of filing: 17.09.2019
(51) Int. Cl.: C08L 1/02, C08L 23/06

(54) **FLEXIBLE PACKAGING FILM COMPRISING NANOCELLULOSE**
FLEXIBLE VERPACKUNGSFOLIE MIT NANOCELLULOSE
FILM D'EMBALLAGE SOUPLE COMPRENANT DE LA NANOCELLULOSE

(30) Priority: 03.10.2018 EP 18198387
(43) Date of publication of application: 11.08.2021
(73) Proprietor: Unilever IP Holdings B.V., 3013 AL Rotterdam (NL); UNILEVER GLOBAL IP LIMITED, Wirral Merseyside CH62 4ZD (GB)
(72) Inventor: DAS, Sandip, Mumbai 400099 Andheri (East) (IN); KURUGANTI, Thejaswi, Sesha, Mumbai 400099 Andheri (East) (IN); MHASKE, Shashank, Tejrao, Mumbai 400019 (IN); SHETH, Parth,Nitin, Mumbai 400019 (IN)
(74) Representative: Reijns, Tiemen Geert Pieter
(86) International application number: PCT/EP2019/074836
(87) International publication number: WO 2020/069850

(56) References cited:
- WO-A1-2017/049021
- WO-A1-2017/192838
- US-A1- 2018 258 259

## Description

### Field of the invention

The present invention relates to polymer composition comprising nanocellulose, to films and containers comprising one or more layers formed from the polymer composition, and to packages thereof.

### Background of the invention

Plastics and plastic-containing articles are extensively used in the packaging of products that have an inherently short life-time, such as personal care products and home care products. While some of the plastic gets recycled, much of it gets disposed in landfills. The disposal and recycling of plastic containing articles is of importance especially for environmental and economic reasons.

Polymer-based multilayer packaging materials are commonly used to combine the respective performance of different polymers. The multilayered packaging material allows the package to perform combination of functions that is not possible with a single layer and provides greater flexibility in packaging design. The multilayered packaging material also reduces the cost and decreases the amount of polymeric material required in comparison to a single layered material to perform the same function. By this approach, the tailored functionality of packaging concepts is created to sufficiently protect sensitive products and obtain extended shelf life. For example, in printed packaging films, polyolefins such as polyethylene (PE) or polypropylene (PP) are often combined with polyethylene terephthalate (PET), in such multilayered film the polyethylene terephthalate (PET) layer is suitable for printing and the PE layer offers excellent sealing property.

However, because of their poor recyclability, most multilayered films are usually incinerated or landfilled, counteracting the efforts towards a circular economy and crude oil independency. Currently, there is a trend towards substituting multilayered packaging having different types of polymer material with film laminates or multilayered film made of a single type of polymer material. Film laminates or multilayered films having a single material, for example, polyolefins along with small amounts of other polymer material are still regarded as films made from single material and are relatively easy to recycle.

Inclusion of biomaterials in a composition along with synthetic thermoplastic polymer has to some extent overcome the issues relating to long-term environmental pollution and high raw material cost associated with the application of synthetic thermoplastics. One such biomaterial of interest is nanocellulose and includes nanocrystalline cellulose, cellulose nanofibers, whiskers and micro-fibrillated cellulose.

Dispersing nanocellulose in polymer composition has proven to be very challenging. Attempts at dispersing nanocellulose in the polymer composition involves modifying the nanocellulose surface which improves the dispersion to some extent but does not solve the dispersion problem completely as such surface modified nanocellulose fibrils may still tend to agglomerate when blended with polymer. The dispersion issue is even more pronounced when nanocellulose fibrils is produced as a 2% dispersion or gel in water and requires replacing water with some material more compatible with the thermoplastic polymer composition. Natural nanocellulose tends to form agglomerates in polymer composition due to poor compatibility between nanocellulose and thermoplastic polymer and creates weak points which reduces the mechanical properties of the film prepared from the polymer composition.

Compatibilizers have been used in the past to improve the dispersion of the nanocellulose in the polymer composition. Compatibilization is a process of addition of a substance to an immiscible blend of polymers to increase their stability. Polymer composition often include unstable phase morphologies, resulting in poor mechanical properties. Compatibilizing the system will make a more stable and better blended phase morphology by creating interactions between the two otherwise immiscible (or partially miscible) polymers.

One such attempt at compatibilizing nanocellulose and polymer was made in WO 2017/049021 A1 (API IP HOLDINGS LLC) which discloses a polymer composite having a polymer, nanocellulose and a compatibilizer. The nanocellulose includes cellulose nanocrystals and/or cellulose nanofibrils and the compatibilizer includes a maleated polymer.

More recently, WO2017/192838 A1 (Dow Global Technologies LLC) discloses a polymer blend comprising polyethylene and nanocellulose that provides improved properties when compared to polymer blends without nanocellulose. The average particle size of the nanocrystalline cellulose is 4 to 5 nanometers wide and 50 to 500 nanometers in length. It also discloses a monolayer film and multilayer films comprising the polymer blends.

US2018/258259 discloses a blend of thermoplastic polymer and nanocellulose, further comprising a specific compatibilizing agent for improving the stability of the system.

It is still desired to uniformly disperse nanocellulose in polymer matrix.

It is thus an object of this invention to provide for light-weight, cost-effective, and sustainable polymer composition and films made thereof.

It is yet another object of the present invention to provide a mono-material film with improved thermal and mechanical properties.

It is a further object of the present invention to provide mono-material film for use in flexible packaging application which is recyclable.

It is yet another object of the present invention to provide packaging film in which the non-recyclable thermoplastic material is at least partially replaced by nanocrystalline cellulose without compromising on the properties of such films.

It is yet another object of the present invention to use a combination of polyethylene nanocrystalline cellulose composite to obtain films with properties suitable for use in flexible packages, preferably for home care and personal care products.

It is yet another object of the present invention to provide a process to disperse dry natural nanocrystalline cellulose uniformly in polymeric matrix with minimum damage to nanocellulose and improved mechanical & thermal properties compared to polymer without nanocellulose.

It is yet another object of the present invention to provide for a process for preparing a film in which the nanocrystalline cellulose is prepared in-situ from agglomerated nanocrystalline cellulose thereby reducing the risk posed from using nanosized particles in the production plant.

### Summary of the invention

The present inventors have surprisingly found that films which include a nanocrystalline cellulose with specific aspect ratio provides improved functional properties like thermal properties and mechanical properties and further in that the films are better adapted for recycling.

It is further preferably found that the film comprising polyolefins, more preferably polyethylene in combination with nanocrystalline cellulose having specific aspect ratio ranges provide improved functional properties like thermal properties and mechanical properties which is suitable for preparing flexible packaging, preferably for home care and personal care products.

The present invention relates to providing a polymer composition and films produced with such polymer composition in which the nanocrystalline cellulose is uniformly dispersed into the polymer matrix with minimal damage and/or agglomeration. The present invention provides a process by which the tendency of the nanocrystalline cellulose to form agglomerates in thermoplastic polymer matrix is significantly minimized.

The present invention achieves at least some of the above-mentioned objects by providing a polymer composition having a thermoplastic polymer and a nanocrystalline cellulose with specific aspect ratio ranges in presence of a compatibilizer and preferably a wetting & dispersing agent.

"Aspect ratio," as it is used herein, denotes the ratio between the diameter to the length of the nanocrystalline cellulose. The higher the aspect ratio, the shorter the nanocrystalline cellulose is relative to the diameter. For the purposes of the present invention the aspect ratio is ranging from 1:1 to 1:4.

"Film" means a sheet structure having a length, width and thickness (caliper), wherein each of the length and width greatly exceed the thickness, i.e., by a factor of 1,000 or more, the structure having one layer (monolayer) or more respectively adjacent layers (multilayer), each layer being a continuous structure formed of a single type of thermoplastic polymer resins (including blends thereof).

### Detailed description of the invention

According to a first aspect of the present invention disclosed is a polymer composition having a thermoplastic polymer, nanocrystalline cellulose, compatibilizer and preferably a wetting & dispersing agent.

### Thermoplastic polymer

The polymer composition of the present invention includes a thermoplastic polymer.

The thermoplastic polymer may be any one of a plastic selected from the group of polyesters, polyolefins, polyamides, polystyrene (PS), polyanhydrides, polyacrylates, polyhydroxyalkanoates, thermoplastic elastomers, thermoplastic polyurethanes, polycarbonate (PC), polylactic acid (PLA), acrylonitrile/butadiene/styrene copolymer (ABS), styrene/acrylonitrile copolymer (SAN), polyoxymethylene (POM), biodegradable thermoplastics, starch-based thermoplastics, their derivatives and/or mixtures thereof.

Preferably the thermoplastic polymer is a polyolefin. The term "polyolefin(s)", as used herein, encompasses a class of thermoplastic polymer that are widely used in the consumer and petrochemicals industry and refers to a polymer that comprises, in polymerized form, a majority amount of olefin monomer, for example ethylene or propylene (based on the weight of the polymer), and optionally may comprise one or more co-monomers.

Polyolefins are typically produced from a simple olefin (also called an alkene with the general formula CnH₂ₙ) as a monomer. For example, polyethylene (PE) is the polyolefin produced by polymerizing the olefin ethylene (C₂H₄). Polypropylene (PP) is another common polyolefin which is made from the olefin propylene (C₃H₆). Copolymers of ethylene and propylene are also useful thermoplastic polymers in accordance with the present disclosure.

In some embodiments of the present invention, polyolefins may also include elastomeric polymers such as homopolymers of conjugated dienes, especially butadiene or isoprene, and random, or block, copolymers and terpolymers of at least one conjugated diene, especially butadiene or isoprene, with at least one aromatic u-olefin, especially styrene and 4-methylstyrene, aromatic diolefin, especially divinylbenzene. In other embodiments of the present invention, polyolefins may include natural or synthetic polyisoprene (PI) and polybutadiene (PB).

Other non-limiting examples of polyolefins includes but are not limited to, ethylene-based polymers such as high density polyethylene (HDPE), low density polyethylene (LDPE), linear low density polyethylene (LLDPE), homogeneously branched linear ethylene/polyolefin interpolymers or homogeneously branched substantially linear ethylene/a-olefin interpolymers; propylene-based polymers such as propylene homopolymers and propylene interpolymers that can be random or block copolymers, branched polypropylene, or a propylene based terpolymer; a blend of two of more polyolefins, such as a blend of an ethylene-base polymer and a propylene-base polymer discussed above; halogenated ethylene-based polymers such as chlorinated ethylene-based polymers and fluorinated ethylene-based polymers.

A preferred polyolefin according to the present invention is a polyethylene. Polyethylene" or "ethylene-based polymer" shall mean polymers comprising greater than 50% by weight of units which have been derived from ethylene monomer. This includes polyethylene homopolymers or copolymers (meaning units derived from two or more comonomers). Common forms of polyethylene known in the art include Low Density Polyethylene (LDPE); Linear Low-Density Polyethylene (LLDPE); Ultra Low Density Polyethylene (ULDPE); Very Low Density Polyethylene (VLDPE); single-site catalyzed Linear Low Density Polyethylene, including both linear and substantially linear low density resins (m-LLDPE); Medium Density Polyethylene (MDPE); and High Density Polyethylene (HDPE).

"LDPE" may also be referred to as "high pressure ethylene polymer" or "highly branched polyethylene" and is partly or entirely homopolymerized or copolymerized. LDPE resins typically have a density in the range of 0.916 to 0.935 g/cm³. The term "LLDPE", includes both resin made using the traditional Ziegler-Natta catalyst systems as well as single-site catalysts, including, but not limited to, bis-metallocene catalysts (sometimes referred to as "m-LLDPE") and constrained geometry catalysts, and includes linear, substantially linear or heterogeneous polyethylene copolymers or homopolymers. LLDPEs contain less long chain branching than LDPEs and includes the substantially linear ethylene polymers which are further defined in U.S. Patent 5,272,236, U.S. Patent 5,278,272, U.S. Patent 5,582,923 and US Patent 5,733,155; the homogeneously branched linear ethylene polymer compositions such as those in U.S. Patent No. 3,645,992; the heterogeneously branched ethylene polymers such as those prepared according to the process disclosed in U.S. Patent No. 4,076,698; and/or blends thereof (such as those disclosed in US 3,914,342 or US 5,854,045). The LLDPEs can be made via gas- phase, solution-phase or slurry polymerization or any combination thereof, using any type of reactor or reactor configuration known in the art. "MDPE" refers to polyethylenes having densities from 0.926 to 0.935 g/cm³. "MDPE" is typically made using chromium or Ziegler-Natta catalysts or using single-site catalysts including, but not limited to, bis-metallocene catalysts and constrained geometry catalysts, and typically have a molecular weight distribution ("MWD") greater than 2.5. The term "HDPE" refers to polyethylenes having densities greater than about 0.935 g g/cm³, which are generally prepared with Ziegler-Natta catalysts, chrome catalysts or single-site catalysts including, but not limited to, bis-metallocene catalysts and constrained geometry catalysts. The term "ULDPE" refers to polyethylenes having densities of 0.880 to 0.912 g/cm³, which are generally prepared with Ziegler-Natta catalysts, chrome catalysts, or single-site catalysts including, but not limited to, bis-metallocene catalysts and constrained geometry catalysts.

A wide variety of polyethylene can be used depending on a number of factors including, for example, the desired properties of the polymer composition, the desired properties of film and/or articles to be made from the polymer blend, the desired properties of articles to be made from such films. A blend of two or more different polyethylenes can be preferably used.

Preferably the polyethylene has a density ranging from 0.870 g/cm³ to 0.970 g/cm³. more preferably the density is in the range from 0.920 g/cm³ to 0.955 g/cm³. Preferably the density is at least 0.900 g/cm³, still preferably at least 0.910 g/cm³, still preferably at least 0.915 g/cm³, most preferably at least 0.920 g/cm³, but typically not more than 0.970 g/cm³, still preferably not more than 0.960 g/cm³, still more preferably not more than 0.960 g/cm³ and most preferably not more than 0.955 g/cm³.

Preferably the polyethylene has a melt index (I₂) of 50g/10 minutes or less, preferably 20 g/10 minutes or less where the Melt index is measured at the conditions of 190°C and a standard weight of 2.16 Kg. All individual values and subranges up to 20 g/10 minutes are included herein and disclosed herein. For example, the polyethylene can have a melt index from a lower limit of 0.2, 0.25, 0.5, 0.75, 1, 2, 4, 5, 10 or 15 g/10 minutes to an upper limit of 1, 2, 4, 5, 10, or 15 g/10 minutes. The polyethylene has a melt index (I₂) of up to 15 g/10 minutes in some embodiments. The polyethylene has a melt index (I₂) of up to 10 g/10 minutes in some embodiments. In some embodiments, the polyethylene has a melt index (I₂) less than 5 g/10 minutes.

Polyethylene that are particularly well-suited for the present invention include linear low-density polyethylene (LLDPE), low density polyethylene (LDPE), high density polyethylene (HDPE), enhanced polyethylene (EPE), and combinations thereof. Various commercially available polyethylene are contemplated for use in polymer composition of the present invention. Examples of commercially available LDPE that can be used in accordance with the present invention include those available from The Dow Chemical Company under the names DOW LDPE^{™} and AGILITY^{™}. Examples of commercially available LLDPE that can be used in accordance with the present invention include DOWLEX^{™} linear low-density polyethylene commercially available from The Dow Chemical Company, such as DOWLEX^{™} 2038.68G. Examples of commercially available HDPE that can be used in embodiments of the present invention include those available from The Dow Chemical Company under the names DOW^{™} HDPE resins and DOWLEX^{™}. In addition to HDPE resins, the polyolefin used in the polymer composition can also include enhanced polyethylenes. Examples of commercially available enhanced polyethylene resins that can be used in accordance with the present invention include ELITE^{™}, ELITE^{™} AT, and AFFINITY^{™} enhanced polyethylenes, such as ELITE^{™} 5400G, which are commercially available from The Dow Chemical Company. Examples of other polyethylene resins that can be used in accordance with the present invention are INNATE^{™} polyethylene resins available from The Dow Chemical Company. Any other suitable commercially available polyethylenes may be selected for use in polymer composition based on the teachings herein.

Preferably the thermoplastic polymer is a blend of two or more polymers. The polymer blend preferably includes a combination of two or more of LDPE, LLDPE, metallocene LLDPE and HDPE. The preferred combination of thermoplastic polymer includes LLDPE and LDPE, metallocene LLDPE and LDPE, HDPE and LDPE. The most preferred combination is metallocene LLDPE and LDPE. Preferably the LLDPE is a bimodal terpolymer LLDPE.

The polymer composition according to the present invention comprises from 40wt% to 99wt% thermoplastic polymer. Preferably the polymer composition comprises at least 50wt% thermoplastic polymer based on the weight of the polymer composition, still preferably at least 55wt% thermoplastic polymer, still preferably at least 60wt%, most preferably at least 65wt%, but typically not more than 97wt%, still preferably not more than 95wt%, still more preferably not more than 90wt% and most preferably not more than 85wt%. Preferably the polyolefin is a polyethylene.

### Nanocrystalline cellulose

The polymer composition of the present invention includes a nanocrystalline cellulose having an aspect ratio from 1:1 to 1:4.

Preferably the aspect ratio of the nanocrystalline cellulose is at least 1:1, still preferably at least 1:1.1, and further preferably at least 1:1.5, but typically not more than 1:4, still preferably not more than 1:3 and most preferably not more than 1:2.

Preferably the polymer composition includes from 0.01 wt% to 30wt%, more preferably from 0.01 wt% to 20wt%, still preferably 0.01wt% to 10wt% of the nanocrystalline cellulose. More preferably, the polymer composition comprises 0.5 to 5 wt. % calculated by weight of dry matter of the nanocrystalline cellulose based on the total weight of the polymer composition. Preferably the amount of nanocrystalline cellulose in the polymer composition is at least 0.5wt%, still preferably at least 1wt%, further preferably at least 1.5wt%, still more preferably 2wt% and most preferably at least 3wt%, but typically not more than 10wt%, still preferably not more than 8wt%, still more preferably not more than 6 and most preferably not more than 5wt%. In yet another embodiment of the polymer composition preferably the amount of nanocrystalline cellulose in the composition is at least 10wt%, still preferably at least 11wt%, further preferably at least 12wt%, still more preferably at least 14wt% and most preferably at least 15wt%, but typically not more than 25wt%, still preferably not more than 22wt%, still more preferably not more than 21wt% and most preferably not more than 20wt% of the composition.

The nanocrystalline cellulose is commercially available in a liquid composition having 5wt% solid content, more preferably having 12wt% solid content. The nanocrystalline cellulose may be in the form of a suspension or a solid form. The powder form may be produced by spray drying or freeze-drying process. Preferably when the nanocrystalline cellulose is in the solid form, it is preferably in the form of a powder. Preferably the nanocrystalline cellulose in the solid form has a density of at least 0.7 g/cm³.

Preferably the crystalline index of the nanocrystalline cellulose XRD is at least 75%, preferably 87%, still preferably at least 90%, further preferably at least 95% and still further preferably at least 98% and most preferably 99%.

The nanocrystalline cellulose is preferably prepared by dissolving pulp, cotton, bleaching kraft pulp (soft wood pulp, hard wood pulp) using acid hydrolysis. The nanocrystalline cellulose is preferably modified by chemical modification which various process known to a person skilled in the art of preparing nanocrystalline cellulose, the chemical modification includes but is not limited to TEMPO-mediated oxidation, cationisation, carboxylation and polymer grafting.

The nanocrystalline cellulose preferably is a linear, long-chain glucose polymer that is rich in oxygen, particularly hydroxyl groups. These hydroxyl groups develop the hydrogen bonds that give the nanocrystalline cellulose its inherent strength while providing a reactive surface of hydroxyl groups on two of the crystal's facets. Though not all of the hydroxyl groups are equally reactive and accessible, they adequately allow a multitude of reactions. The hydroxyl groups are also the reason why nanocrystalline cellulose, is inherently hydrophilic. The nanocrystalline cellulose is preferably surface modified, still preferably treated with sulphur.

Preferably the nanocrystalline cellulose also comprises acidic groups attached to its surface which allows for reaction with a variety of bases. Though many traditional products (such as cellulose acetate, carboxymethylcellulose and cellulose ethers) take advantage of the reactivity of cellulose, the nanocrystalline cellulose allows for the bonding of a variety of hydrophobic structures. This makes the material compatible with a wide range of solvents and polymer matrices. The nanocrystalline cellulose may be hydrophobic or hydrophilic.

One gram of nanocrystalline cellulose preferably includes over 125 quadrillion (1016) particles, each preferably having a surface area of 4500 nm², theoretically providing a surface area of about 550 m²/g of nanocrystalline cellulose material. The surface area is affected by the quality of the particle dispersion in a media and whether the nanocrystalline cellulose material has been dried or re-dispersed back into a medium.

Preferably the nanocrystalline cellulose is a charged nanocrystalline cellulose material and the functional groups impart a negative charge to the surface of the crystal.

Preferably the nanocrystalline cellulose is commercially available as CelluForce NCC^{™} from Celluforce.

The number average particle size of the nanocrystalline cellulose present in the polymer composition is preferably in the range from 25 to 600 nm, more preferably from 25 to 170 nm. Most preferably the nanocrystalline cellulose is substantially spherical.

Preferably the number average particle size of the nanocrystalline cellulose in the polymer composition is at least 25nm, still preferably at least 50nm, further preferably at least 60nm, still further preferably at least 100nm and most preferably at least 125nm, but typically not more than 600nm, preferably not more than 550nm, still preferably not more than 450nm, still more preferably not more than 400nm and most preferably not more than 350nm.

The nanocrystalline cellulose may preferably be combined with the thermoplastic polymer prior to forming a melt phase. In preferred embodiments the nanocrystalline cellulose may be combined with the thermoplastic polymer in the form of blend, masterbatch, compound, pellet, or powder. It is also possible to combine the nanocrystalline cellulose with the thermoplastic polymer while forming the melt phase. The nanocrystalline cellulose may be introduced to the melt phase in the form of a blend, masterbatch, compound, pellet or powder containing both the hydrophilic cellulose and the thermoplastic polymer.

### Compatibilizer

The polymer composition according to the present invention includes a compatibilizer. Preferably the compatibilizer is selected from the group consisting of ethylene vinyl acetate copolymer (EVA), ethylene acrylic acid (EAA), styrene butadiene styrene block copolymer (SBS), a copolymer of polyethylene and maleic anhydride and combinations thereof.

Compatibilization in polymer chemistry is the addition of a substance to an immiscible blend of two or more polymers to increase their stability. Generally, and without wishing to be bound by theory, the function of a compatibilizer used in the present invention is to reduce interface tension (i.e., strengthen the interface between the phases) and thus improve mechanical properties of the stabilized blend (e.g., reducing the size and morphology of the phase-separated phases). It is thought the compatibilizer strengthens the interface by broadening it from a sharp change in composition and properties to a broader gradual transitional interface. Polymer blends often include unstable phase morphologies, resulting in poor mechanical properties. Compatibilizing the system will make a more stable and better blended phase morphology by creating interactions between the two or more otherwise-immiscible (or partially miscible) polymers.

The polymer composition according to the present invention includes a compatibilizer which is preferably a maleated polymer selected from the group consisting of maleated polyethylene, maleated polypropylene, maleated polystyrene, maleated polylactide, maleated poly(ethylene terephthalate), and combinations thereof. Preferably the maleated polymer is biomass-based, biodegradable, and/or compostable. In some embodiments, the maleated polymer is biomass-based, biodegradable, and/or compostable. Preferably the thermoplastic polymer and the maleated polymer may be formed from a common polymer, which is preferably biomass-based, biodegradable, and/or compostable. The maleated polymer may be derived from maleic anhydride produced from biomass-derived 5-hydroxymethylfurfural, for example.

Preferably the compatibilizer is a maleic anhydride grafted polyethylene (MAH-g-PE). The MAH-g-PE is believed to further enhance compatibility of the nanocrystalline cellulose within the polyethylene matrix. The grafted polyethylene may be any number of polyethylenes including, for example, ultralow density polyethylene (ULDPE), low density polyethylene (LDPE), linear low density polyethylene (LLDPE), medium density polyethylene (MDPE), high density polyethylene (HDPE), high melt strength high density polyethylene (HMS-HDPE), ultrahigh density polyethylene (UHDPE), and combinations thereof. In some embodiments, the grafted polyethylene comprises linear low density polyethylene, low density polyethylene, or high density polyethylene.

The compatibilizer is present in the polymer composition at a concentration from 0.1wt% to 10wt%, more preferably 0.1wt% to 5wt% based on the weight of the composition. Preferably the amount of compatibilizer in the polymer composition is at least 0.1 wt%, still preferably at least 0.5 wt%, further preferably at least 0.8 wt% and most preferably at least 1 wt%, but typically not more than 5 wt%, still preferably not more than 4.5 wt% and most preferably not more than 3wt%. Most preferably, the polymer composition comprises 1 to 3 wt. % calculated by weight of dry matter, of the compatibilizer.

A preferred polymer composition includes from 40wt% to 99 wt% thermoplastic polymer, 0.01wt% to 30wt% nanocrystalline cellulose and 0.1 to 10wt% compatibilizer. In the preparation of the film from such polymer composition, the polymer composition is further blended with the thermoplastic polymer before forming the film. Without wishing to be bound by theory it is believed that the process of blending the polymer composition along with a thermoplastic polymer before forming into a film process avoids degradation of the composition and improves the thermostability of the prepared film.

### Wetting and dispersing agent

The polymer composition of the present invention preferably includes a wetting and dispersing agent.

The wetting and dispersing agent is present in the polymer composition at a concentration from 0.5 wt% to 30 wt% based on the weight of the composition. Preferably the amount of wetting and dispersing agent in the polymer composition is at least 0.5wt%, still preferably at least 1wt%, further preferably at least 1.5wt% and most preferably at least 2wt%, but typically not more than 30wt%, still preferably not more than 20wt% and most preferably not more than 10wt%. Preferably the polymer composition comprises 0.5 to 10 wt. % calculated by weight of dry matter, more preferably 0.5wt% to 5wt% of the wetting and dispersing agent.

Preferably the wetting and dispersing agent is a blend of different fatty acid ester having a melting range and includes a low melting fraction and a high melting fraction.

Without wishing to be bound by theory it is believed that the low melting fraction provides quick wetting and low melt viscosity and reduces the compacting of nanocrystalline cellulose in the first part of the extrusion process. Wetting and dispersing agent adsorbs onto nanocrystalline surface, which leads into a more homogenous dispersion. The high melting fraction reduces the melt viscosity of the masterbatch or compounds during the extrusion process. This results in an improved processing.

Preferably the wetting and dispersing agent is commercially available and is a fatty acid ester copolymer with acidic groups and with 65% active adsorbed on silica commercially available as BYK-P4101 from BYK Chemie.

### Other ingredients:

The polymer composition according to the present invention may include at least one of an oxidant, a colorant, a slip agent, pigment, antioxidant, an anti-block, a processing aid, or a combination thereof may be incorporated into the polymer composition, by blending prior at an appropriate stage of the process.

### Process for preparing the polymer composition

According to a second aspect of the present invention provided is a process for preparing the polymer composition of the first aspect, the process including the steps of:
i. providing a thermoplastic polymer;
ii. providing a nanocrystalline cellulose in a solid agglomerated form having a spherical diameter from 4 to 40 micrometres; more preferably from 14 to 16 micrometers;
iii. providing a compatibilizer;
iv. combining the thermoplastic polymer, the nanocrystalline cellulose in a solid agglomerated form, compatibilizer under effective shear condition ranging from 785 to 12560 s⁻¹, preferably generated by screw compression ratio of 1.5 to 1.8 and preferably with a screw rotation of 40 to 60rpm and under a temperature of 130°C to 210°C;
v. providing the polymer composition wherein the nanocrystalline cellulose is modified in-situ to provide a thermoplastic polymer matrix having a nanocrystalline cellulose having an aspect ratio from 1:1 to 1:4;

In the first step of producing the polymer composition according to the present invention, the nanocrystalline cellulose in agglomerated form is combined with a thermoplastic polymer or a combination of polymers prior to or while forming a melt phase. For example, the nanocrystalline cellulose in agglomerated form may be combined with the polymer or a combination of polymers in the form of a blend, masterbatch, pellet, compound, or powder. Alternately the nanocrystalline cellulose in an agglomerated form may be introduced to the melt phase in the form of a blend, masterbatch, pellet, compound, or powder containing both the nanocrystalline cellulose in agglomerated form and the polymer or a combination of polymer.

Preferably the polymer composition according to the present invention can be prepared by melt blending the prescribed amounts of the components according to the first aspect with a twin-screw extruder before feeding into an extruder or other equipment used for film fabrication. Such polymer compositions can also be prepared by tumble blending the prescribed amounts of the components according to the first aspect before feeding into the extruder or other equipment used for film fabrication. In some embodiments, polymer composition of the present invention can be in the form of pellets. For example, the individual components can be melt blended and then formed into pellets using a twin screw extruder or other techniques known to those of skill in the art based on the teachings herein.

### Film prepared from the polymer composition

According to a third aspect of the present invention disclosed is a film comprising the polymer composition of the first aspect or prepared according to the process of the second aspect.

The film may be prepared by any of the methods commonly known in the art and includes but is not limited to compression moulding, injection moulding, blown film extrusion, more preferably the film is prepared by blow moulding.

Preferably the compression moulded film comprises a thermoplastic polymer, nanocrystalline cellulose, compatibilizer wherein the nanocrystalline cellulose has an aspect ratio of from 1:1 to 1:4 and preferably a number average particle size from 395nm to 505nm.

Preferably the injection moulded component comprises a thermoplastic polymer, nanocrystalline cellulose, compatibilizer wherein the nanocrystalline cellulose has an aspect ratio of from 1:1 to 1:4, and preferably number average particle size from 125nm to 150nm.

Preferably the extrusion blow film comprises a thermoplastic polymer, nanocrystalline cellulose, compatibilizer wherein the nanocrystalline cellulose has an aspect ratio of from 1:1 to 1:4 and preferably number average particle size from 65nm to 150nm.

Preferably the extrusion cast film comprises a thermoplastic polymer, nanocrystalline cellulose, compatibilizer wherein the nanocrystalline cellulose has an aspect ratio of from 1:1 to 1:4 and preferably number average particle size from 65nm to 150nm.

The extrusion blow or cast film may preferably be oriented in machine direction, cross direction or both in directions.

Preferably the film according to the present invention is a monolayer film or a multilayer film. Such monolayer films and multilayer films may generally be produced using techniques known to those of skill in the art based on the teachings herein. The multiple layers of the film may either include a tie-layer/sealant layer in between the layers or are laminated to each other or otherwise brought together with different film structures. Preferably the film is a blow film or a cast film.

Preferably the ratio of the weight percentage of nanocrystalline cellulose in the film to the weight percentage of compatibilizer is between 1:3 to 1:5.

Preferably the film according to the present invention has a thickness from 10 micrometres to 300 micrometres, more preferably from 10 micrometres to 100 micrometres, still preferably from 10 micrometres to 75 micrometres, preferably from 30 micrometres to 50 micrometres.

Preferably in some embodiments the film according to the present invention is printed, preferably reverse printed.

Preferably, a process for preparing a film according to any one of the preceding aspect, the process comprising the steps of:
i. providing a thermoplastic polymer, preferably in an amount from 40wt% to 99wt%;
ii. providing a nanocrystalline cellulose in a solid agglomerated form having a spherical diameter from 4 to 40 micrometres; more preferably from 14 to 16 micrometers, preferably the amount of nanocrystalline cellulose is from 0.01wt% to 30wt%;
iii. providing a compatibilizer, preferably the amount of the compatibilizer is from 0.1wt% to 10wt%;
iv. combining the thermoplastic polymer, nanocrystalline cellulose, compatibilizer under effective shear condition ranging from 785 to 12560 s⁻¹, preferably generated by screw having compression ratio of 1.5 to 1.8 and preferably screw rotation of 40 to 60nm under a temperature condition of from 130° to 210°C;
v. providing a polymer composition wherein the crystalline cellulose is modified in-situ to provide a thermoplastic polymer matrix having a nanocrystalline cellulose with an aspect ratio of 1:1 to 1:4.
vi. combining the prepared polymer composition from step (v) with thermoplastic polymer; and,
vii. forming a film.

According to another aspect of the present invention disclosed is a package formed from the film according the third aspect of the present invention. Examples of such packages can include flexible packages, pouches, stand-up pouches, and pre-made packages or pouches. Such packages can be formed using techniques known to those of skill in the art in view of the teachings herein.

Some embodiments of the invention will now be described in detail in the following Examples.

### Examples

Example 1: Evaluating polymer composition having nanocrystalline cellulose in the polymer matrix.

Specific amounts of polyethylene polymer, nanocrystalline cellulose, compatibilizer and a wetting agent as provided in Table 1 were provided and mixed in a screw extruder (melt compounded) to prepare polymer compositions.

**TABLE 1**

| Ingredients | Polymer Composition | Polymer Composition 1 |
|---|---|---|
| | A (wt%) | (wt%) |
| thermoplastic polymer: LLDPE | 94.5 | 94.5 |
| Nanocellulose with an aspect ratio of 1:5 | 1 | 0 |
| Nanocrystalline cellulose with an aspect ratio of 1:4 | 0 | 1 |
| Compatibilizer: Maleic anhydride PE copolymer (Polybond 3009) | 3 | 3 |
| Wetting and dispersing agent (BYK-P 4101) | 1.5 | 1.5 |

The polymer compositions were then injection moulded to produce injection moulded article and tested for various parameter and the data obtained is given in Table 2.

Measurement technique:
SEM Analysis: Crystal morphology and structure may be determined by standard techniques known to those skilled in the art such as scanning electron microscopy (SEM). SEM is an imaging and analysis technique based on the detection of electrons and X-rays that are emitted from a material when irradiated by a scanning electron beam. Imaging allows the user to distinguish between primary particle and agglomerate sizes.

Automated image analysis using computer software enables the user to determine particle size distributions. Scanning electron microscopy (SEM) is a particle counting technique and produces a number-weighted size distribution. Accordingly the figures quoted herein for particle length and width will generally represent average values over a population of particles, more specifically the D[1 ,0] number-length mean of the particle length or the particle width respectively.

Thermogravimetric Analysis: Thermogravimetric analysis (TGA) is a method of thermal analysis in which changes in physical and chemical properties of materials are measured as a function of increasing temperature or as a function of time. The thermo Gravimetric Analysis (TGA) was measured in a Perkin Elmer Pyris 1 TGA instrument.

Rheometer: Rheology being defined as the study of the flow and deformation of matter which describes the interrelation between force, deformation and time. The most common flow behavior and one that is most easily measured on a rotational rheometer or viscometer is shear flow. Rheology of the polymer composition was measured by MCR 101, Anton Paar, UK.

DSC Analysis: Differential Scanning Calorimetry ("DSC") is a thermal analysis technique which measures the temperatures and heat flow associated with transitions in materials as a function of time and temperature. These measurements provide quantitative and qualitative information about the sample transitions that involve endothermic or exothermic processes, or changes in heat capacity. The degree of crystallinity has a great influence on hardness, density, transparency, softening point and diffusion of solid materials. Many polymers have both a crystalline and amorphous region. In these cases, crystallinity is specified as a percentage of the mass of the material that is crystalline with respect to the total mass. Crystallinity can be measured using x-ray diffraction techniques and differential scanning calorimetry (DSC). The DSC measurement was carried out in a Differential Scanning Calorimeter - Waters Q 100 instrument and the data is recorded and provided in Table 2.

**Table 2**

| **Ingredients** | **Film A (wt%)** | **Film 1 (wt%)** |
|---|---|---|
| LLDPE | 94.5 | 94.5 |
| Nanocellulose with an aspect ratio of 1:5 | 1 | 0 |
| Nanocrystalline cellulose with an aspect ratio of 1:4 | 0 | 1 |
| Compatibilizer Maleic anhydride PE copolymer (Polybond^{®} 3009 from Addivant^{™} Corporation) | 3 | 3 |
| Wetting and dispersing agent (BYK-P 4101 from BYK- Chemie) | 1.5 | 1.5 |
| Mechanical strength (MPa) | 430.25 | 518.56 |
| Dispersion | Nanocellulose were agglomerated and showed lower dispersion. | good dispersion of the nanocellulose was observed |
| TGA | 440°C | 451°C |

| DSC Analysis | | |
|---|---|---|
| Crystallinity temperature (°C) | 114.84 | 114.26 |
| Melting temperature (°C) | 120.97 | 121.06 |
| Enthalpy (J/g) | 51.2 | 62.28 |
| Crystallinity (%) | 17.4 | 21.26 |
| Rheology | 6820 | 7590 |
| Viscosity (Pa.S @ 0.1 shear rate s⁻¹) | | |
| Shear stress (Pa @ 0.1 shear rate s⁻¹) | 959 | 999 |

The data provided in Table 2 shows that the Film 1 in accordance to the present invention has improved mechanical properties and thermal properties as compared to the film A. Film 1 according to the present invention has higher enthalpy which indicates that it can absorb higher heat energy before deformation thereby allowing broader heat-sealing window when compared with the comparative Film A.

## Claims

1. A polymer composition comprising:
i. a thermoplastic polymer;
ii. a nanocrystalline cellulose; and,
iii. a compatibilizer.
wherein the nanocrystalline cellulose has an aspect ratio from 1:1 to 1:4 where the aspect ratio denotes the ratio between the diameter to the length of the nanocrystalline cellulose.

2. A composition according to claim 1 wherein the nanocrystalline cellulose has a number average particle size from 25nm to 600 nm.

3. A composition according to claim 1 or 2 wherein the compatibilizer is selected from the group consisting of ethylene vinyl acetate copolymer (EVA), styrene butadiene styrene block copolymer (SBS), ethylene acrylic acid (EAA), a copolymer of polyethylene and maleic anhydride and combinations thereof.

4. A composition according to any one of the preceding claims 1 to 3 wherein the thermoplastic polymer is selected from the group consisting of polyolefin, preferably selected from low-density polyethylene, high-density polyethylene, linear low-density polyethylene, polyolefin elastomers, ethylene copolymers with vinyl acetate and polyester.

5. A composition according to any one of the preceding claims 1 to 4 wherein the nanocrystalline cellulose is surface modified, preferably treated with sulphur.

6. A composition according to any one of the preceding claims 1 to 5 wherein the composition comprises a wetting and dispersing agent.

7. A composition according to any one of the preceding claims 1 to 6 wherein the wetting and dispersing agent is a blend of fatty acid ester copolymer with acidic groups.

8. A monolayer film comprising the polymer composition according to any one of the preceding claims 1 to 7.

9. A multilayer film, wherein at least one layer comprises the polymer composition according to any one of the preceding claims 1 to 7.

10. A film according to any one of the claims 8 or 9 wherein the film comprises from 50 wt% to 97 wt% polyolefin, preferably polyethylene based on the total weight of the film.

11. A film according to any one of the claims 8 to 10 wherein the film comprises from 0.5 wt% to 5 wt% nanocrystalline cellulose based on the total weight of the film.

12. A film according to any one of the claims 8 to 11 wherein the film comprises from 0.5 wt% to 5 wt% compatibilizer based on the total weight of the film.

13. A film according to any one of the claims 8 to 12 wherein the film comprises from 0.5 wt% to 5 wt% wetting and dispersing agent based on the total weight of the film.

14. A flexible package comprising the film according to any one of the claims 8 to 13.

15. A process for preparing a polymer composition according to any one of the preceding claims 1 to 7, the process comprising the steps of:
i. providing a thermoplastic polymer;
ii. providing a nanocrystalline cellulose in a solid agglomerated form having a spherical diameter from 4 to 40 micrometres; more preferably from 14 to 16 micrometers;
iii. providing a compatibilizer;
iv. combining the thermoplastic polymer, nanocrystalline cellulose, compatibilizer under effective shear condition ranging from 785 to 12560 s⁻¹, preferably generated by screw having compression ratio of 1.5 to 1.8 and preferably screw rotation of 40 to 60nm under a temperature condition of from 130° to 210°C;
v. providing a polymer composition wherein the crystalline cellulose is modified in-situ to provide a thermoplastic polymer matrix having a nanocrystalline cellulose with an aspect ratio of 1:1 to 1:4.

## Patentansprüche

1. Polymerzusammensetzung, umfassend:
i. ein thermoplastisches Polymer;
ii. eine nanokristalline Cellulose; und
iii. ein Kompatibilisierungsmittel,
wobei die nanokristalline Cellulose ein Aspektverhältnis von 1:1 bis 1:4 aufweist, wobei das Aspektverhältnis das Verhältnis zwischen dem Durchmesser zur Länge der nanokristallinen Cellulose bezeichnet.

2. Zusammensetzung nach Anspruch 1, wobei die nanokristalline Cellulose eine durchschnittliche Teilchengröße von 25 nm bis 600 nm aufweist.

3. Zusammensetzung nach Anspruch 1 oder 2, wobei das Kompatibilisierungsmittel ausgewählt ist aus der Gruppe, bestehend aus Ethylenvinylacetat-Copolymer (EVA), Styrol-butadien-styrol-Blockcopolymer (SBS), Ethylenacrylsäure (EAA), einem Copolymer von Polyethylen und Maleinsäureanhydrid und Kombinationen davon.

4. Zusammensetzung nach irgendeinem der vorhergehenden Ansprüche 1 bis 3, wobei das thermoplastische Polymer ausgewählt ist aus der Gruppe, bestehend aus Polyolefin, vorzugsweise ausgewählt unter Polyethylen niedriger Dichte, Polyethylen hoher Dichte, linearem Polyethylen niedriger Dichte, Polyolefinelastomeren, Ethylen-Copolymeren mit Vinylacetat und Polyester.

5. Zusammensetzung nach irgendeinem der vorhergehenden Ansprüche 1 bis 4, wobei die nanokristalline Cellulose oberflächenmodifiziert ist, vorzugsweise mit Schwefel behandelt ist.

6. Zusammensetzung nach irgendeinem der vorhergehenden Ansprüche 1 bis 5, wobei die Zusammensetzung ein Benetzungs- und Dispergiermittel umfasst.

7. Zusammensetzung nach irgendeinem der vorhergehenden Ansprüche 1 bis 6, wobei das Benetzungs- und Dispergiermittel eine Mischung von Fettsäureester-Copolymer mit sauren Gruppen ist.

8. Einschichtige Folie, umfassend die Polymerzusammensetzung nach irgendeinem der vorhergehenden Ansprüche 1 bis 7.

9. Mehrschichtige Folie, wobei mindestens eine Schicht die Polymerzusammensetzung nach irgendeinem der vorhergehenden Ansprüche 1 bis 7 umfasst.

10. Folie nach Anspruch 8 oder 9, wobei die Folie 50 Gew.-% bis 97 Gew.-% Polyolefin, vorzugsweise Polyethylen, bezogen auf das Gesamtgewicht der Folie, umfasst.

11. Folie nach irgendeinem der Ansprüche 8 bis 10, wobei die Folie 0,5 Gew.-% bis 5 Gew.-% nanokristalline Cellulose, bezogen auf das Gesamtgewicht der Folie, umfasst.

12. Folie nach irgendeinem der Ansprüche 8 bis 11, wobei die Folie 0,5 Gew.-% bis 5 Gew.-% Kompatibilisierungsmittel, bezogen auf das Gesamtgewicht der Folie, umfasst.

13. Folie nach irgendeinem der Ansprüche 8 bis 12, wobei die Folie 0,5 Gew.-% bis 5 Gew.-% Benetzungs- und Dispergiermittel, bezogen auf das Gesamtgewicht der Folie, umfasst.

14. Flexible Verpackung, umfassend die Folie nach irgendeinem der Ansprüche 8 bis 13.

15. Verfahren zur Herstellung einer Polymerzusammensetzung nach irgendeinem der vorhergehenden Ansprüche 1 bis 7, wobei das Verfahren die Schritte umfasst:
i. Bereitstellen eines thermoplastischen Polymers;
ii. Bereitstellen einer nanokristallinen Cellulose in fester agglomerierter Form mit einem Kugeldurchmesser von 4 bis 40 Mikrometern, bevorzugter von 14 bis 16 Mikrometern;
iii. Bereitstellen eines Kompatibilisierungsmittels;
iv. Kombinieren des thermoplastischen Polymers, der nanokristallinen Cellulose, des Kompatibilisierungsmittels unter effektiver Scherbedingung im Bereich von 785 bis 12560 s⁻¹, vorzugsweise erzeugt durch eine Schnecke mit einem Kompressionsverhältnis von 1,5 bis 1,8 und vorzugsweise bei einer Schneckenrotation von 40 bis 60 nm unter einer Temperaturbedingung von 130° bis 210°C;
v. Bereitstellen einer Polymerzusammensetzung, wobei die kristalline Cellulose in-situ modifiziert ist, um eine thermoplastische Polymermatrix mit einer nanokristallinen Cellulose mit einem Aspektverhältnis von 1:1 bis 1:4 bereitzustellen.

## Revendications

1. Composition polymère comprenant :
i. un polymère thermoplastique ;
ii. une cellulose nanocristalline ; et,
iii. un agent de compatibilité.
dans laquelle la cellulose nanocristalline présente un rapport de dimensions de 1:1 à 1:4 où le rapport de dimensions indique le rapport entre le diamètre à la longueur de la cellulose nanocristalline.

2. Composition selon la revendication 1, dans laquelle la cellulose nanocristalline présente une taille moyenne de particule en nombre de 25 nm à 600 nm.

3. Composition selon la revendication 1 ou 2, dans laquelle l'agent de compatibilité est choisi dans le groupe consistant en copolymère d'éthylène acétate de vinyle (EVA), copolymère séquencé de styrène butadiène styrène (SBS), éthylène acide acrylique (EAA), un copolymère de polyéthylène et d'anhydride maléique et des combinaisons de ceux-ci.

4. Composition selon l'une quelconque des revendications 1 à 3 précédentes, dans laquelle le polymère thermoplastique est choisi dans le groupe consistant en polyoléfine, de préférence choisi parmi polyéthylène faible densité, polyéthylène haute densité, polyéthylène faible densité linéaire, élastomères de polyoléfines, copolymères d'éthylène avec acétate de vinyle et polyester.

5. Composition selon l'une quelconque des revendications 1 à 4 précédentes, dans laquelle la cellulose nanocristalline est modifiée en surface, de préférence traitée avec du soufre.

6. Composition selon l'une quelconque des revendications 1 à 5 précédentes, dans laquelle la composition comprend un agent mouillant et dispersant.

7. Composition selon l'une quelconque des revendications 1 à 6 précédentes, dans laquelle l'agent mouillant et dispersant est une combinaison de copolymère d'ester d'acide gras avec des groupes acides.

8. Film monocouche comprenant la composition polymère selon l'une quelconque des revendications 1 à 7 précédentes.

9. Film multicouche, dans laquelle au moins une couche comprend la composition polymère selon l'une quelconque des revendications 1 à 7 précédentes.

10. Film selon l'une quelconque des revendications 8 ou 9, dans lequel le film comprend de 50 % en masse à 97 % en masse de polyoléfine, de préférence polyéthylène sur la base de la masse totale du film.

11. Film selon l'une quelconque des revendications 8 à 10, dans lequel le film comprend de 0,5 % en masse à 5 % en masse de cellulose nanocristalline sur la base de la masse totale du film.

12. Film selon l'une quelconque des revendications 8 à 11, dans lequel le film comprend de 0,5 % en masse à 5 % en masse d'agent de compatibilité sur la base de la masse totale du film.

13. Film selon l'une quelconque des revendications 8 à 12, dans lequel le film comprend de 0,5 % en masse à 5 % en masse d'agent mouillant et dispersant sur la base de la masse totale du film.

14. Emballage flexible comprenant le film selon l'une quelconque des revendications 8 à 13.

15. Procédé pour la préparation d'une composition polymère selon l'une quelconque des revendications 1 à 7 précédentes, le procédé comprenant les étapes de :
i. fourniture d'un polymère thermoplastique ;
ii. fourniture d'une cellulose nanocristalline dans une forme agglomérée solide ayant un diamètre sphérique de 4 à 40 micromètres ; encore mieux de 14 à 16 micromètres ;
iii. fourniture d'un agent de compatibilité ;
iv. combinaison des polymère thermoplastique, cellulose nanocristalline, agent de compatibilité dans une condition de cisaillement efficace de 785 à 12 560 s⁻¹, de préférence produite par une vis ayant un rapport de compression de 1,5 à 1,8 et de préférence une rotation de vis de 40 à 60 nm sous une condition de température de 130° à 210°C ;
v. fourniture d'une composition polymère dans laquelle la cellulose cristalline est modifiée in-situ pour fournir une matrice polymère thermoplastique ayant une cellulose nanocristalline avec un rapport de dimensions de 1:1 à 1:4.
